# EUROPÄISCHE PATENTANMELDUNG

(11) **EP 1 952 939 A1**
(43) Veröffentlichungstag der Anmeldung: **06.08.2008**
(21) Anmeldenummer: 07405350.5
(22) Anmeldetag: 10.12.2007
(51) Int. Cl.: B23Q 7/04

(54) **Werkstückhandhabungsvorrichtung**

(30) Priorität: 30.01.2007 CH 1522007
(71) Anmelder: Fritz Studer AG, 3612 Steffisburg (CH); Wenger Automation & Engineering AG, 8409 Winterthur (CH)
(72) Erfinder: Gaegauf, Alfred, 3665 Wattenwil (CH); Wenger, Philipp, 8409 Winterthur (CH)
(74) Vertreter: AMMANN PATENTANWÄLTE AG BERN

(57) **Zusammenfassung**

Die Werkstückhandhabungsvorrichtung umfasst einen in Verfahrrichtung (y) verfahrbaren Ausleger (1), einen Laufwagen (11), der ebenfalls in Verfahrrichtung verfahrbar am Ausleger angeordnet ist, und einen Greifer (15; 25), der quer zur Verfahrrichtung (z) verfahrbar am Laufwagen angeordnet ist.

## Beschreibung

Die vorliegende Erfindung bezieht sich auf eine Werkstückhandhabungsvorrichtung und eine Anordnung mit einer Bearbeitungsmaschine und einer Werkstückhandhabungsvorrichtung.

Um die Bearbeitung rationell zu gestalten, werden Werkstückhandhabungsvorrichtungen verwendet (im Folgenden auch Handhabungsvorrichtung genannt). Diese dienen dazu, Werkstücke automatisch der Bearbeitungsstation zuzuführen und nach der Bearbeitung abzutransportieren.

Bei engen Platzverhältnissen in der Bearbeitungsmaschine ist ein automatischer Werkstückwechsel schwierig. So sind z.B. Schleifmaschinen bekannt, die sehr niedrig gebaut sind. Das Be- und Entladen kann zwar mittels einer üblichen Handhabungsvorrichtung in Form eines Roboters oder Laders von vorne oder von oben erfolgen (vgl. beispielsweise die Dokumente DE 32 05 547 A1 und DE 44 43 467 C1, welche jeweils eine Handhabungsvorrichtung für einen Werkstückwechsel von oben offenbaren). Das Be- und Entladen von vorne oder von oben bringt jedoch erhebliche Nachteil mit sich:
- Die Arbeitsstation ist für den Benutzer nicht mehr zugänglich, sodass das Einrichten der Bearbeitungsmaschine sowie ein etwaiger manueller Werkstückwechsel erschwert sind.
- Ist eine Beladung von vorne vorgesehen, kann der Benutzer die Arbeitsstation und somit das Werkstück während des Bearbeitungsprozesses nicht mehr einsehen. Dies ist jedoch für eine optimale Bearbeitung oft erforderlich.
- Es ist eine Automatik vorzusehen, um die Bedienertüren der Bearbeitungsmaschine zu öffnen und zu schliessen. Dies verursacht zusätzliche Kosten und erhöht die Werkstückwechselzeit.
- Die Handhabungsvorrichtung kann leicht bei der Bearbeitung anfallendes Material verschleppen. Um dem zu begegnen, sind zusätzliche, kostenintensive Massnahmen erforderlich.

In der EP 0 721 821 A2 wird vorgeschlagen, eine Werkstückhandhabungsvorrichtung vorzusehen, die neben der Bearbeitungsmaschine angeordnet ist und einen verfahrbaren, seitlich in die Bearbeitungsmaschine greifenden Schwenkarm aufweist. Dieser ist an einem Portal verfahrbar angeordnet, welches sich über der Station erstreckt, wo die Werkstücke bereitgestellt werden. Diese Ausgestaltung der Handhabungsvorrichtung führt zu einem relativ voluminösen Aufbau. Auch ist die Ansteuerung des Schwenkarms relativ kompliziert. Wird z.B. ein Werkstück bei der Arbeitsstation gewechselt, so wird dieses in der Regel vertikal bewegt. Eine derartige Bewegung bedingt, dass der Schwenkarm sowohl geschwenkt als auch verfahren wird. Dies ist mit einfachen Ansteuerungen nicht möglich.

Ausgehend von diesem Stand der Technik liegt eine Aufgabe der vorliegenden Erfindung darin, eine Werkstückhandhabungsvorrichtung schaffen, welche einen einfacheren und kompakteren Aufbau aufweist.

Eine Werkstückhandhabungsvorrichtung, die diese Aufgabe löst, ist im Anspruch 1 angegeben. Die weiteren Ansprüche geben bevorzugte Ausführungen sowie eine Anordnung mit einer derartigen Handhabungsvorrichtung und einer Bearbeitungsmaschine an.

Gemäss Anspruch 1 ist ein Ausleger vorgesehen, an welchem ein Laufwagen angeordnet ist. Ausleger und Laufwagen sind in derselben Verfahrrichtung verfahrbar. Die Handhabungsvorrichtung ist dadurch einfach und kompakt im Aufbau.

Die Erfindung wird im Folgenden anhand von Ausführungsbeispielen unter Bezugnahme auf Figuren erläutert. Es zeigen
Fig. 1 ein erstes Ausführungsbeispiel einer Anordnung mit einer erfindungsgemässen Handhabungsvorrichtung und einer Bearbeitungsmaschine in einer Vorderansicht;
Fig. 2 einen Teil der Anordnung gemäss Fig. 1 in einer Seitenansicht; und
Fig. 3 ein zweites Ausführungsbeispiel einer Anordnung mit einer erfindungsgemässen Handhabungsvorrichtung und einer Bearbeitungsmaschine in einer Vorderansicht.

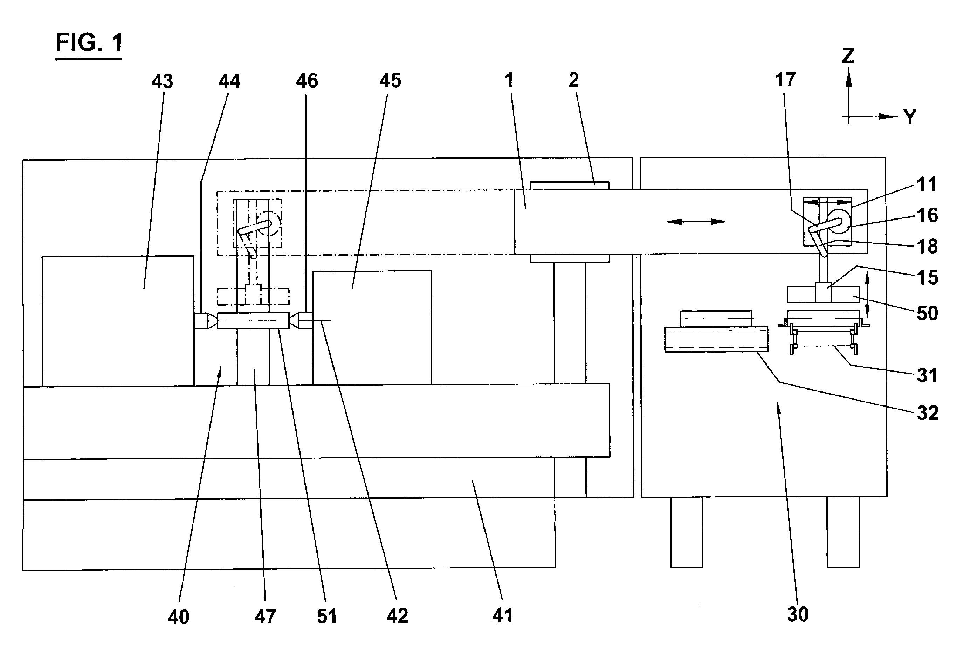

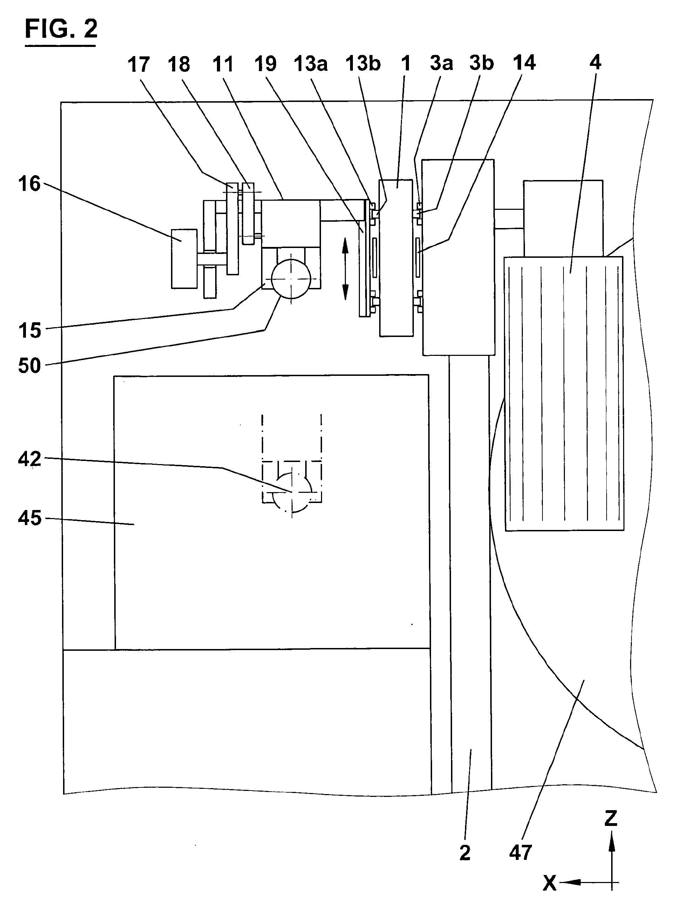

Wie Fig. 1 und 2 zeigen, umfasst die Handhabungsvorrichtung einen Ausleger 1, der in der horizontalen Richtung verfahrbar ist. Gemäss Fig. 1 entspricht diese Verfahrrichtung der y-Richtung. Der Ausleger 1 ist in Form einer Platte ausgebildet und an einem Träger 2 in Form einer Stütze gehalten. Diese ist am Maschinenbett 41 der Bearbeitungsmaschine befestigt. Alternativ ist es denkbar, die Stütze 2 an einer Seitenwand der Bearbeitungsmaschine oder ausserhalb derselben am Boden abzustützen.

Zum Führen des Auslegers 1 weist der Träger 2 Führungsschienen 3a auf, entlang welchen die Führungsschuhe 3b des Auslegers 1 gleiten können. Der Träger 2 und somit die Führungen 3a sind kürzer als der Ausleger 1. Am Träger 2 ist ein Antrieb 4 mit einem Ritzel angebracht, das in eine am Ausleger 1 gebildete Zahnstange greift. (Ritzel und Zahnstange sind in den Figuren nicht dargestellt.) Der Antrieb 4 ist als Elektroantrieb ausgebildet und durch eine geeignete Steuerung, z.B. einer CNC-Steuerung ansteuerbar.

Am Ausleger 1 ist ein Laufwagen 11 angeordnet, der ebenfalls in y-Richtung verfahrbar ist. Zur Führung ist der Laufwagen 11 mit Führungsschienen 13a versehen, welche auf Führungsschuhen 13b des Auslegers 1 gleiten. Am Ausleger 1 ist ein Zahnriemen 14 angeordnet, welcher an den Antrieb 4 und an den Laufwagen 11 gekoppelt ist. Der Ausleger 1 und der Laufwagen 11 sind dadurch miteinander zwangsgekoppelt. Anstelle eines Zahnriemens 14 sind auch andere Mittel für eine Zwangskopplung geeignet, z.B. eine Kette.

Im Betrieb treibt der Antrieb 4 das Ritzel an, wodurch die Zahnstange und somit der Ausleger 1 in der Verfahrrichtung verfahren wird. Gleichzeitig treibt der Antrieb 4 den Zahnriemen 14 an, wodurch der Laufwagen 11 in Bezug auf den Ausleger 1 in dieselbe Verfahrrichtung verfahren wird. Ausleger 1 und Laufwagen 11 werden demnach teleskopartig bewegt.

Am Laufwagen 11 ist ein Greifer 15 angeordnet, der in vertikaler Richtung, d.h. z-Richtung verfahrbar ist und zum Aufnehmen und Halten eines Werkstücks 50 dient.

Die vertikale Bewegung des Greifers 15 erfolgt über einen Kurbeltrieb, wie er in Fig. 2 genauer gezeigt ist. Am Laufwagen 11 ist ein Schwenkantrieb 16 befestigt, welcher mit einem Schwenkarm 17 versehen ist. Der Schwenkarm 17 ist fest mit der Drehwelle des Schwenkantriebs 16 verbunden.

Als Schwenkantrieb 16 eignet sich z.B. ein pneumatischer Antrieb, mittels welchem der Schwenkarm 17 zwischen einer ersten Stellung und einer zweiten Stellung verschwenkbar ist. Es ist auch denkbar, einen Elektroantrieb als Schwenkantrieb 16 zu verwenden.

Der Greifer 15 ist auf der einen Seite über eine Geradführung 19 geführt, welche in z-Richtung verläuft und welche z.B. als Gleitführung ausgebildet ist. Auf der gegenüberliegenden Seite ist der Greifer 15 über eine Kopplungsstange 18 an den Schwenkarm 17 gekoppelt. Die Kopplungsstange 18 ist an ihren beiden Enden gelenkig mit dem Schwenkarm 17 bzw. dem Greifer 15 verbunden. Schwenkarm 17 und Kopplungsstange 18 bilden somit starre Achsen, welche gelenkig miteinander verbunden sind und mittels welcher der Greifer 15 an den Schwenkantrieb 16 gekoppelt ist. Am Greifer 15 ist ein weiterer Antrieb vorgesehen (nicht dargestellt), welcher beispielsweise pneumatischer Art ist und zum Öffnen und Schliessen der Backen des Greifers 15 dienen.

Befindet sich der Schwenkarm 17 in der ersten Stellung, so befindet sich der Greifer 15 in der eingefahrenen Endposition, wie sie in Fig. 2 gezeigt ist. Wird der Schwenkantrieb 16 betätigt, so wird der Schwenkarm 17 zur zweiten Stellung geschwenkt, wobei über die Kopplungsstange 18 der Greifer 15 nach unten geschoben wird, sodass er die ausgefahrene Endposition einnimmt, wie sie in Fig. 2 durch die strichpunktierten Linien dargestellt ist. Die Geradführung 19 bewirkt dabei, dass der Greifer 15 auf einer linearen Bewegungsbahn verschoben wird.

Die Verwendung des Schwenkantriebs 16 hat den Vorteil, dass sich beim Schwenken des Schwenkarms 17 die vertikale Lage des Greifers 15 sinusförmig mit der Zeit verändert. Der Greifer 15 wird demnach nicht ruckartig, sondern sanft abgebremst bzw. beschleunigt. Dadurch ist u.a. gewährleistet, dass der Greifer 15 auch in der Anfahrtsbewegung ein Werkstück sicher hält, wenn dieses aus einer ruhenden Position aufgenommen wird. Trotz ruckfreier Bewegung gewährleistet der sinusartige Bewegungsablauf ein schnelles Absenken sowie Anheben eines Werkstückes, sodass die Werkstückwechselzeit klein bleibt.

Wie Fig. 1 zeigt, ist die Handhabungsvorrichtung so angeordnet, dass Werkstücke zwischen einer Bereitstellungsstation 30 und einer Arbeitsstation 40 hin und her transportierbar sind. Wie dies die strichpunktierten Linien in Fig. 1 illustrieren, ist der Ausleger 1 derart am Träger 2 verfahrbar angeordnet, dass er über das der Arbeitsstation 40 zugewandte Ende des Trägers 2 auskragen vermag. Der Ausleger 1 ist ebenfalls so verfahrbar, dass er über das der Bereitstellungsstation 30 zugewandte Ende des Trägers 2 auskragen vermag.

Die Bereitstellungsstation 30 umfasst eine Zuführeinrichtung 31 zum Zuführen der zu bearbeitenden Werkstücke (Rohteile) und eine Abführeinrichtung 32 zum Abführen der bearbeiteten Werkstücke (Fertigteile). Die Bereitstellungsstation 30 ist z. B. Teil eines Bereitstellungsmoduls, mit welchem die Bearbeitungsmaschine nachträglich ausgerüstet werden kann. Sie kann aber auch direkt in die Bearbeitungsmaschine integriert sind.

Die beiden Einrichtungen 31 und 32 sind nebeneinander angeordnet und in der Höhe verstellbar. Diese ist so gewählt, dass sich die Werkstückachse der auf den Einrichtungen 31 und 32 liegenden Werkstücke auf dem gleichen Niveau befindet wie die Bearbeitungsachse 42 der Bearbeitungsmaschine. Dies erlaubt es, den Greifer 15 mit einem fest vorgegebenen vertikalen Hub zu betreiben, um Werkstücke aufnehmen und abgeben zu können. Als Zuführeinrichtung 31 eignet sich z.B. eine Taktkette, als Abführeinrichtung 32 ein Transportband. Es auch denkbar, die Werkstücke mittels Paletten zu- und abzuführen.

Die Bearbeitungsmaschine umfasst eine Arbeitsstation 40, wo die Werkstücke bearbeitet werden. Im hier gezeigten Ausführungsbeispiel ist die Bearbeitungsmaschine als Schleifmaschine ausgebildet. Zur rotativen Bearbeitung wird ein Werkstück 51 um die Bearbeitungsachse 42 rotiert. Zu diesem Zweck umfasst die Schleifmaschine einen Werkstückspindelstock 43 mit einer Zentrierspitze 44, einen Reitstock 45, der in y-Richtung verfahrbar ist und eine Gegenspitze 46 aufweist, und eine Schleifscheibe 47, die in der x- und y-Richtung verfahrbar ist.

Zum Schutz sind die Bearbeitungsmaschine sowie die Bereitstellungsstation durch Schutzabdeckungen versehen (nicht dargestellt).

Ein möglicher Ablauf des Werkstückwechsel ist wie folgt:

Während ein Werkstück 51 an der Arbeitsstation 40 bearbeitet wird, befindet sich der Greifer 15 in der Warteposition, welche sich z.B. über dem Reitstock 45 befindet. Ist die Bearbeitung beendet, wird der Ausleger 1 und somit auch der Laufwagen 11 in negativer y-Richtung verfahren, bis sich der Greifer 15 über dem Werkstück 51 befindet. Durch Betätigen des Schwenkantriebs 16 wird der Greifer 15 gesenkt und anschliessend das Werkstück 51 erfasst. Der Reitstock 42 gibt das Werkstück 51 frei und dieses wird zusammen mit dem Greifer 15 hochgefahren. (Die Position von Laufwagen 11 und Ausleger 1 beim Hochfahren des Greifers 15 ist in Fig. 1 durch die strichpunktierten Linien dargestellt.) Der Laufwagen 11 wird in positiver y-Richtung bewegt, bis sich das Werkstück 51 über der Abführeinrichtung 32 befindet. Das Werkstück 51 wird abgelegt und anschliessend wird der Laufwagen 11 weiter in positiver y-Richtung bewegt, bis sich der Greifer 15 über der Zuführeinrichtung 31 befindet. Das neu zu bearbeitende Werkstück 50 wird vom Greifer 15 aufgenommen und zur Arbeitsstation 40 transportiert.

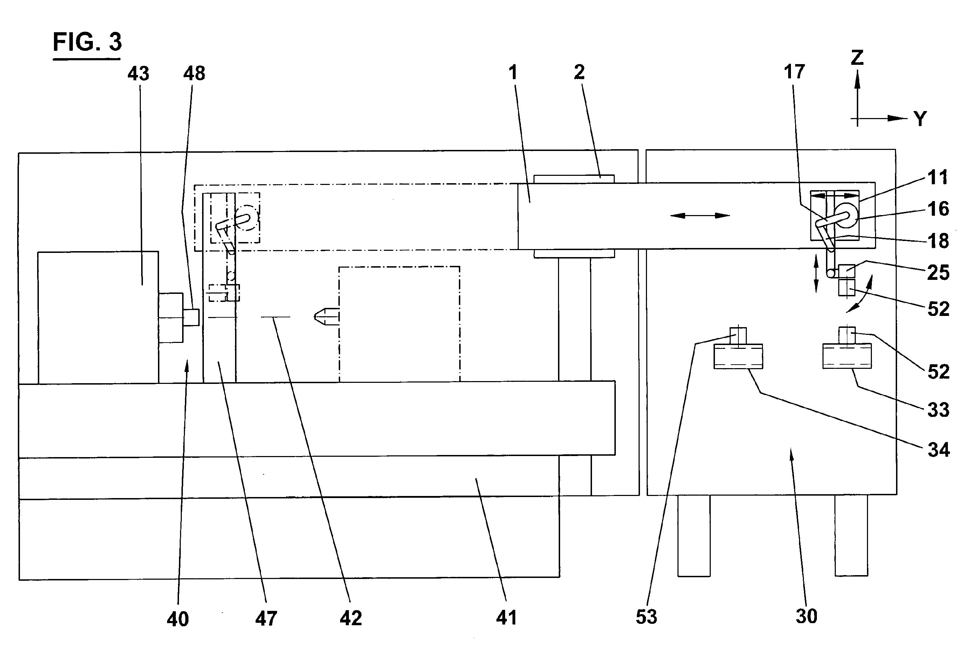

Die in den Fig. 1 und 2 gezeigte Bearbeitungsmaschine dient zum Bearbeiten von Werkstücken in Form von Wellenteilen. Fig. 3 zeigt eine weitere Bearbeitungsmaschine, welche zum Bearbeiten von Werkstücken in Form von Futterteilen 52 geeignet ist, wobei gleiche Teile mit den gleichen Bezugszeichen versehen sind. Der Werkstückspindelstock 43 umfasst ein Spannfutter 48 zum Einspannen eines Werkstücks. Die Werkstücke 52 und 53 sind auf der Zuführeinrichtung 33 und Abführeinrichtung 34 so positioniert, dass die Rotationsachse der Werkstücke 52, 53 in z-Richtung ausgerichtet und somit rechtwinklig zur Bearbeitungsachse 42 bei der Arbeitsstation 40 angeordnet ist. Zur Handhabung der Werkstücke 52, 53 ist der Greifer 25 mit einem schwenkbaren Greiferkopf versehen. Zum Schwenken dient ein pneumatischer Antrieb (nicht dargestellt). Im hier gezeigten Ausführungsbeispiel ist der Greiferkopf um 90 Grad schwenkbar.

Zuführeinrichtung 33 und Abführeinrichtung 34 sind jeweils als Transportband ausgebildet, welches in der Höhe verstellbar ist. Dadurch kann die Höhe der Zuführeinrichtung 33 und Abführeinrichtung 34 an die entsprechende Länge der zu bearbeitenden Werkstücke so angepasst werden, dass der vertikale Hub des Greifers 25, mit welchem sich dieser beim Betätigen des Schwenkantriebs 16 bewegt, bei den beiden Stationen 30 und 40 nicht verändert werden braucht.

Optional kann die Handhabungsvorrichtung so ausgebildet sind, dass wahlweise der Greifer 25 oder der Greifer 15 am Laufwagen 11 montierbar ist. Dadurch ist es einfache Weise möglich, die Handhabungsvorrichtung für die Handhabung von Wellenteilen 50 und Futterteilen 52 bereitzustellen.

Soweit nicht schon erwähnt, ergeben sich aus der oben beschriebenen Konzeption der Handhabungsvorrichtung folgende Vorteile:

Die Handhabungsvorrichtung ist so ausgebildet, dass die Beund Entladung der Bearbeitungsmaschine seitlich erfolgen kann, d.h. die Verfahrrichtung des Auslegers 1 ist im Wesentlichen parallel zur Bearbeitungsachse 42. Der Zugang von vorne sowie die Sicht auf die Arbeitsstation 40 sind somit nicht beeinträchtigt. Im Weiteren befindet sich die Handhabungsvorrichtung beim Bearbeitungsprozess ausserhalb des Arbeitsraums. Dadurch wird einer Verschleppung von Material vorgebeugt, welches während der Bearbeitung z.B. in Form von Spänen, Kühlschmiermittel und dergleichen anfällt. Ist die Arbeitsstation 40 durch übliche, verschiebbare Türen geschützt, so brauchen diese nicht automatisch ausgebildet zu sein.

Wie insbesondere Fig. 2 zeigt, weist die Handhabungsvorrichtung einen kompakten Aufbau auf. Diese eignet sich daher auch für die Beladung von Bearbeitungsmaschinen mit einem niedrigen Aufbau auf. Beispielsweise können Schleifmaschinen seitlich beladen werden, bei welchen die freie Raumhöhe zwischen Reitstock 45 und oberste Kante der Maschine kleiner als 600 mm oder sogar kleiner als 300 mm ist. Die Kompaktheit der Handhabungsvorrichtung erlaubt es auch, eine bereits bestehende Bearbeitungsmaschine, die nur für einen manuellen Werkstückwechsel ausgelegt ist, so nachzurüsten, dass die Werkstücke auch automatisch gewechselt werden können.

Mit der Handhabungsvorrichtung können typischerweise Werkstücke mit einem Durchmesser bis 100 mm und einem Gewicht bis 5 kg präzise zwischen den Stationen hin und her transportiert werden, wobei die Positioniergenauigkeiten im Bereich von ± 0.1 mm liegen.

Die Kinematik ist einfach gestaltet: Der Ausleger 1 und der Laufwagen 11 werden durch den Antrieb 4 und der Greifer 15, 25 durch den Schwenkantrieb 16 und die Geradführung 19 jeweils in linearer Richtung bewegt. Die Ansteuerung der Handhabungsvorrichtung ist dadurch einfach.

Die Bewegungen des Greifers 15, 25 können alleine durch Betätigen von pneumatischen Antrieben erzeugt werden. In diesem Fall sind keine elektrische Leitungen erforderlich, welche über den Träger 2 und Ausleger 1 zum Laufwagen 11 führen.

Aus der vorangehenden Beschreibung sind dem Fachmann zahlreiche Abwandlungen zugänglich, ohne den Schutzbereich der Erfindung zu verlassen, der durch die Ansprüche definiert ist.

Die Handhabungsvorrichtung ist zum Be- und Entladen von verschiedenen Arten von Bearbeitungsmaschinen einsetzbar, insbesondere solche, welche zur rotativen Bearbeitung eines Werkstücks eingesetzt werden wie Rundschleifen oder Drehen.

Die Handhabungsvorrichtung braucht nicht unbedingt so orientiert zu sein, wie in den Figuren gezeigt. Die Verfahrrichtung des Auslegers 1 bzw. Laufwagens 11 kann an den jeweiligen Anwendungszweck angepasst sein.

Der Greifer kann beliebig ausgebildet sein, um ein oder mehrere Werkstücke erfassen und halten zu können. So sind z.B. mechanische, pneumatische oder magnetische Greifer geeignet.

## Patentansprüche

1. Werkstückhandhabungsvorrichtung, mit einem in Verfahrrichtung (y) verfahrbaren Ausleger (1), einem Laufwagen (11), der ebenfalls in Verfahrrichtung verfahrbar am Ausleger angeordnet ist, und einem Greifer (15; 25), der quer zur Verfahrrichtung (z) verfahrbar am Laufwagen angeordnet ist.

2. Handhabungsvorrichtung nach Anspruch 1, wobei am Laufwagen (11) ein Schwenkantrieb (16) zum Verfahren des Greifers (15, 25) angeordnet ist, wobei der Schwenkantrieb vorzugsweise pneumatisch betätigbar ist.

3. Handhabungsvorrichtung nach Anspruch 2, wobei der Greifer (15; 25) über mechanische Achsen (17, 18) an den Schwenkantrieb (16) gekoppelt ist und/oder am Laufwagen eine Geradführung (19) zum Führen des Greifers (15, 25) angeordnet ist.

4. Handhabungsvorrichtung nach einem der vorangehenden Ansprüche, wobei der Greifer (25) zur Handhabung von Futterteilen (52, 53) schwenkbar ist.

5. Handhabungsvorrichtung nach einem der vorangehenden Ansprüche, wobei der Ausleger (1) und der Laufwagen (11) an denselben Antrieb (4) gekoppelt sind, um eine gleichzeitige Verfahrbewegung von Ausleger und Laufwagen zu bewirken.

6. Handhabungsvorrichtung nach einem der vorangehenden Ansprüche, wobei die Verfahrrichtung (y) des Auslegers (1) horizontal und die Verfahrrichtung (z) des Greifers (15; 25) vertikal ausgerichtet ist.

7. Anordnung mit einer Bearbeitungsmaschine und einer Handhabungsvorrichtung nach einem der vorangehenden Ansprüche, umfassend eine erste Station (30) zur Ablage von Werkstücken (50, 51; 52, 53) und eine zweite Station (40) zum Bearbeiten der Werkstücke, wobei die Handhabungsvorrichtung so angeordnet ist, dass der Greifer (15, 25) zwischen den beiden Stationen verfahrbar ist.

8. Anordnung nach Anspruch 7, wobei die Bearbeitungsachse (42), um welche ein Werkstück (50; 52) bei der zweiten Station (40) bearbeitbar ist, parallel zur Verfahrrichtung (y) des Auslegers (1) angeordnet ist.

9. Anordnung nach einem der Ansprüche 7 bis 8, wobei die erste Station (30) zum Zuführen und Abführen der Werkstücke (50, 51; 52, 53) zwei Fördereinrichtungen (31, 32; 33, 34) aufweist, welche vorzugsweise nebeneinander angeordnet sind.

10. Anordnung nach einem der Ansprüche 7 bis 9, wobei die Bearbeitungsmaschine einen Werkstückspindelstock (43), einen Reitstock (45) und/oder eine Schleifscheibe (47) aufweist.
